# EUROPEAN PATENT APPLICATION

(11) **EP 4 835 346 A1**
(43) Date of publication of application: **04.11.2026**
(21) Application number: 24913036.0
(22) Date of filing: 26.12.2024
(51) Int. Cl.: F21S 2/00, B60Q 3/60, D06N 7/00, F21Y 101/00, F21Y 103/00, F21Y 115/10, F21Y 115/15

(54) **SHEET FOR LIGHT-EMITTING DISPLAY DEVICE, AND LIGHT-EMITTING DISPLAY DEVICE**

(30) Priority: 27.12.2023 JP 2023221075
(71) Applicant: Sekisui Chemical Co., Ltd., Osaka-shi, Osaka 530-8565 (JP)
(72) Inventor: MURAKAMI, Junnosuke, Mishima-gun, Osaka 618-0021 (JP); YANAI, Masashi, 6041LE Roermond (NL)
(74) Representative: Ter Meer und Partner mbB
(86) International application number: PCT/JP2024/046236
(87) International publication number: WO 2025/143150

(57) **Abstract**

An inventive light-emitting display device (50) comprises a sheet (10) for a light-emitting display device comprising a substrate (15) having light transmittance and comprising an elastic rubber body and a light source (40) for irradiating the sheet (10) for a light-emitting display device with light. The inventive sheet (10) for a light-emitting display device comprises a substrate (15) having light transmittance and comprising an elastic rubber body, and is used in combination with the light source (40).

## Description

### Technical Field

The present invention relates to a sheet for a light-emitting display device, for example, for vehicle interior member and a light-emitting display device including the sheet for a light-emitting display device.

### Background Art

Optical display members for showing information such as temperature, time, the vehicle speed, and others in vehicles such as automobiles with light are being actively developed recently from the viewpoint of enhancement in the performance thereof. To show information appropriately, optical display members need to have excellent light transmittance. To partially constitute the interior decorations in vehicles, optical display members are required to have a luxurious feeling such as a flexible feel and high aesthetic quality.

Foams are known as flexible materials. If foams are used for interior members, the interior members can have a satisfactory texture. Since foams has high impact absorbing properties, thermal insulating properties, and other characteristics besides high flexibility, foams have been used in various industrial fields. Foams have been developed that have enhanced light transmittance. For example, PTL1 proposes a polyolefinic resin foam with closed cell structure having a total light transmittance of 15% or more and having a shrinkage rate in the machine direction (MD) and in the transverse direction (TD), an average cell diameter in the machine direction (MD), a thickness, an apparent density, and a 25% compression hardness adjusted to specific ranges. PTL2 proposes an acrylic resin foam having an average cell diameter of 1.2 mm or more. In the cited literatures 1 and 2, the light transmittance is enhanced mainly by adjusting the average cell diameter.

Furthermore PTL3 proposes a thermal insulation foam including thermoplastic resin having a total light transmittance of 80% or more, wherein the expansion ratio is 5 to 100, and the average cell diameter is 1 to 15 mm. In this PTL3, the use of resin such as methyl methacrylate having a high total light transmittance enhances the light transmittance of the foam.

### Citation List

### Patent literature

PTL1: JP 2017-190375 A
PTL2: JP 2013-203984 A
PTL3: JP 08-067757 A

### Summary of Invention

### Technical Problem

Unfortunately, the interior members containing the foams described in PTLs 1 to 3 may have insufficient light transmittance in the case where light from a light source such as an LED is transmitted through the interior members to create a light effect on the interior members. Since the foams have high heat insulation properties, heat generated from the light source may be dissipated insufficiently.

Then, an object of the present invention is to provide a sheet for a light-emitting display device having a satisfactory texture, high light transmittance, and high heat dissipation properties and a light-emitting display device including the sheet for a light-emitting display device.

### Solution to Problem

The present inventors have earnestly examined, consequently found that a sheet for a light-emitting display device can be provided with a substrate including an elastic rubber body to solve the above-mentioned problem, and completed the following present invention.

Specifically, the present invention provides the following [1] to [8].
[1] A light-emitting display device comprising:
   a sheet for a light-emitting display device comprising a substrate having light transmittance and comprising an elastic rubber body and
   a light source which irradiates the sheet for a light-emitting display device with light.
[2] The light-emitting display device according to the above-mentioned [1], wherein rubber constituting the elastic rubber body is silicone rubber.
[3] The light-emitting display device according to the above-mentioned [2], wherein the rubber constituting the elastic rubber body comprises silicone gel.
[4] The light-emitting display device according to any one of the above-mentioned [1] to [3], wherein the rubber constituting the elastic rubber body has a durometer hardness of 20 or more and 80 or less in the case of measurement with a type A durometer in accordance with JIS K6253-3, or has a durometer hardness of 20 or more and 90 or less in the case of measurement with a type E durometer in accordance with JIS K6253-3.
[5] The light-emitting display device according to any one of the above-mentioned [1] to [4], wherein the substrate further comprises a foam, and the elastic rubber body is irradiated with light from the light source.
[6] The light-emitting display device according to any one of [1] to [5], wherein the sheet for a light-emitting display device further comprises a skin bonded to the substrate directly or through another layer.
[7] The light-emitting display device according to any one of the above-mentioned [1] to [6], wherein the sheet for a light-emitting display device is a vehicle interior member.
[8] A sheet for a light-emitting display device having light transmittance and comprising a substrate comprising an elastic rubber body, wherein the sheet is used in combination with a light source.

### Advantageous Effects of Invention

The present invention enables providing a sheet for a light-emitting display device having a satisfactory texture, high light transmittance, and high heat dissipation properties and a light-emitting display device including the sheet for a light-emitting display device.

### Brief Description of Drawings

[Fig. 1] Fig. 1 is a schematic cross-sectional view of a sheet for a light-emitting display device according to an embodiment of the present invention.
[Fig. 2] Fig. 2(a) is a schematic cross-sectional view of a sheet for a light-emitting display device according to another embodiment of the present invention, and Fig. 2(b) is a schematic plan view of the sheet for a light-emitting display device according to the other embodiment of the present invention. The sheet for a light-emitting display device
[Fig. 3] Fig. 3 is a schematic cross-sectional view of a laminated body according to an embodiment of the present invention.

### Description of Embodiments

### <Sheet for light-emitting display device>

Hereinafter, an inventive sheet for a light-emitting display device will be described with reference to the embodiments.

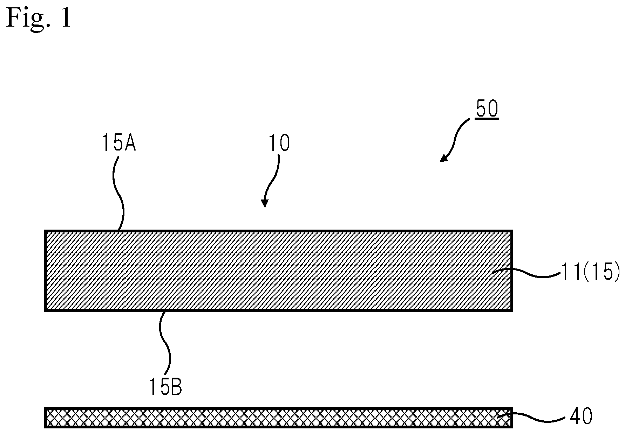

Fig. 1 is a sheet for a light-emitting display device according to an embodiment of the present invention. As shown in Fig. 1, a sheet 10 for a light-emitting display device according to an embodiment includes a substrate 15 formed of an elastic rubber body 11.

Since the substrate 15 is constituted of an elastic rubber body 11, the substrate 15 can have light transmittance. Light from the below-described light source 40 can therefore pass through the sheet 10 for a light-emitting display device to create a light effect effectively. It is preferable that the light source 40 be disposed on the opposite face (the rear face 15B) side to the front face 15A of the substrate 15. Since the sheet 10 for a light-emitting display device has the substrate 15 constituted of the elastic rubber 11, the sheet 10 for a light-emitting display device also has a satisfactory texture. A light effect is conducted on the front face 15A side of the substrate 15 in the sheet for a light-emitting display device. For example, if the sheet for a light-emitting display device is used for the below-described interior member for vehicles, the front face 15A is on the interior side.

Hereinafter, the members constituting the sheet for a light-emitting display device will be described in more detail.

### [Substrate and elastic rubber body]

The elastic rubber body 11 is constituted of rubber. It is preferable that the elastic rubber body 11 be a non-foam material. Examples of rubber constituting the elastic rubber body 11 include silicone rubber, acrylic rubber, urethane rubber, and fluororubber. These rubbers may be used alone or in combination of two or more.

Among the above, silicone rubber is preferably used as the rubber of the elastic rubber body 11. If silicone rubber is used as the elastic rubber body, the sheet for a light-emitting display device has a satisfactory texture and satisfactory light transmittance. Since silicone rubber is highly thermally conductive, silicone rubber can dissipate heat generated by a light source such as an LED effectively, so that silicone rubber is prevented from being heated by light from the light source, and can have a more satisfactory texture.

Among silicone rubbers, silicone gel is preferable from the viewpoint of a texture and light transmittance. The rubber constituting the elastic rubber body preferably contains silicone gel. Although the silicone gel may be any silicone gel, it is preferable that the silicone gel be gel-like material yielded by curing addition type liquid silicone rubber after the crosslinking density thereof is controlled to 1/5 to 1/10 of the common density. Examples of silicone gel suitable for the elastic rubber body 11 include "Pantel GEL", which is available from SEKISUI POLYMATECH CO., LTD.

### (Addition type liquid silicone rubber)

Addition type liquid silicone rubber contains vinyl group-containing organopolysiloxane as the base resin, hydrogenorganopolysiloxane as a crosslinking agent, and a platinum compound as a catalyst.

Examples of the vinyl group-containing organopolysiloxane include linear diorganopolysiloxanes such as dimethylpolysiloxane capped at both molecular terminals with dimethylvinylsiloxy groups, a copolymer of dimethylsiloxane and methylvinylsiloxane capped at both molecular terminals with dimethylvinylsiloxy groups, a copolymer of dimethylsiloxane and diphenylsiloxane capped at both molecular terminals with dimethylvinylsiloxy groups, a copolymer of dimethylsiloxane, methylvinylsiloxane, and diphenylsiloxane capped at both molecular terminals with dimethylvinylsiloxy groups, methyltrifluoropropylpolysiloxane capped at both molecular terminals with dimethylvinylsiloxy groups, a copolymer of dimethylsiloxane and methyltrifluoropropylsiloxane capped at both molecular terminals with dimethylvinylsiloxy groups, a copolymer of dimethylsiloxane, methyltrifluoropropylsiloxane, and methylvinylsiloxane capped at both molecular terminals with dimethylvinylsiloxy groups, a copolymer of dimethylsiloxane and vinylmethylsiloxane capped at both molecular terminals with trimethylsiloxy groups, a copolymer of dimethylsiloxane, vinylmethylsiloxane, and diphenylsiloxane capped at both molecular terminals with trimethylsiloxy groups, a copolymer of vinylmethylsiloxane and methyltrifluoropropylsiloxane capped at both molecular terminals with trimethylsiloxy groups, dimethylpolysiloxane capped at one molecular terminal with a trimethylsiloxy group and at the other molecular terminal with a dimethylvinylsiloxy group, a copolymer of dimethylsiloxane and methylvinylsiloxane capped at one molecular terminal with a trimethylsiloxy group and at the other molecular terminal with a dimethylvinylsiloxy group, a copolymer of dimethylsiloxane and diphenylsiloxane capped at one molecular terminal with a trimethylsiloxy group and at the other molecular terminal with a dimethylvinylsiloxy group, a copolymer of dimethylsiloxane, diphenylsiloxane, and methylvinylsiloxane capped at one molecular terminal with a trimethylsiloxy group and at the other molecular terminal with a dimethylvinylsiloxy group, methyltrifluoropropylpolysiloxane capped at one molecular terminal with a trimethylsiloxy group and at the other molecular terminal with a dimethylvinylsiloxy group, a copolymer of dimethylsiloxane and methyltrifluoropropylsiloxane capped at one molecular terminal with a trimethylsiloxy group and at the other molecular terminal with a dimethylvinylsiloxy group, a copolymer of dimethylsiloxane, methyltrifluoropropylsiloxane, and methylvinylsiloxane capped at one molecular terminal with a trimethylsiloxy group and at the other molecular terminal with a dimethylvinylsiloxy group, dimethylpolysiloxane capped at both molecular terminals with methyldivinylsiloxy groups, a copolymer of dimethylsiloxane and methylvinylsiloxane capped at both molecular terminals with methyldivinylsiloxy groups, a copolymer of dimethylsiloxane and diphenylsiloxane capped at both molecular terminals with methyldivinylsiloxy groups, a copolymer of dimethylsiloxane, methylvinylsiloxane, and diphenylsiloxane capped at both molecular terminals with methyldivinylsiloxy groups, methyltrifluoropropylpolysiloxane capped at both molecular terminals with methyldivinylsiloxy groups, a copolymer of dimethylsiloxane and methyltrifluoropropylsiloxane capped at both molecular terminals with methyldivinylsiloxy groups, a copolymer of dimethylsiloxane, methyltrifluoropropylsiloxane, and methylvinylsiloxane capped at both molecular terminals with methyldivinylsiloxy groups, dimethylpolysiloxane capped at both molecular terminals with trivinylsiloxy groups, a copolymer of dimethylsiloxane and methylvinylsiloxane capped at both molecular terminals with trivinylsiloxy groups, a copolymer of dimethylsiloxane and diphenylsiloxane capped at both molecular terminals with trivinylsiloxy groups, a copolymer of dimethylsiloxane, methylvinylsiloxane, and diphenylsiloxane capped at both molecular terminals with trivinylsiloxy groups, methyltrifluoropropylpolysiloxane capped at both molecular terminals with trivinylsiloxy groups, a copolymer of dimethylsiloxane and methyltrifluoropropylsiloxane capped at both molecular terminals with trivinylsiloxy groups, and a copolymer of dimethylsiloxane, methyltrifluoropropylsiloxane, and methylvinylsiloxane capped at both molecular terminals with trivinylsiloxy groups. Examples of the vinyl group-containing organopolysiloxane also include branched organopolysiloxanes containing organosilsesquioxane units (for example, methylsilsesquioxane units; (CH₃)SiO_{3/2}) in small amounts in the main chains in the linear diorganopolysiloxanes exemplified above.

Although the vinyl group-containing organopolysiloxane may have any viscosity, the viscosity at 23°C is preferably 50 to 100,000 mPa•s, more preferably 100 to 10,000 mPa•s from the viewpoint of enhancing the handleability and workability of a silicone rubber composition to be yielded by mixing the raw materials for silicone gel and the strength and the fluidity of the silicone gel to be yielded. The viscosity can be measured with a rotational viscometer.

Examples of the hydrogenorganopolysiloxane include 1,1,3,3-tetramethyldisiloxane, 1,1,3,3,5,5-hexamethyltrisiloxane, 1,3,5,7-tetramethylcyclotetrasiloxane, a cyclic polymer of methylhydrogensiloxane, a cyclic copolymer of methylhydrogensiloxane and dimethylsiloxane, tris(dimethylhydrogensiloxy)silylmethylsilane, tris(dimethylhydrogensiloxy)silylphenylsilane, dimethylpolysiloxane capped at both molecular terminals with dimethylhydrogensiloxy groups, methylhydrogenpolysiloxane capped at both molecular terminals with dimethylhydrogensiloxy groups, a copolymer of methylhydrogensiloxane and dimethylsiloxane capped at both molecular terminals with dimethylhydrogensiloxy groups, a copolymer of methylhydrogensiloxane and diphenylsiloxane capped at both molecular terminals with dimethylhydrogensiloxy groups, a copolymer of methylhydrogensiloxane, dimethylsiloxane, and diphenylsiloxane capped at both molecular terminals with dimethylhydrogensiloxy groups, methylhydrogenpolysiloxane capped at both molecular terminals with trimethylsiloxy groups, a copolymer of dimethylsiloxane and methylhydrogensiloxane capped at both molecular terminals with trimethylsiloxy groups, a copolymer of methylhydrogensiloxane and diphenylsiloxane capped at both molecular terminals with trimethylsiloxy groups, and a copolymer of methylhydrogensiloxane, diphenylsiloxane, and dimethylsiloxane capped at both molecular terminals with trimethylsiloxy groups.

The hydrogenorganopolysiloxane has a viscosity of preferably 0.1 to 1,000 mPa•s, more preferably 1 to 500 mPa•s. If the viscosity of the hydrogenorganopolysiloxane is too low, the viscosity of the silicone rubber composition to be yielded is also low, so that the workability does not only deteriorate, but the silicone gel to be yielded may be too hard. If the viscosity of the hydrogenorganopolysiloxane is too high, the viscosity of the silicone rubber composition to be yielded is also high, which may have an adverse effect on the workability.

The blended amount of the hydrogenorganopolysiloxane is an amount such that the number ratio of hydrogen atoms bound to silicon atoms (SiH groups) in the hydrogenorganopolysiloxane to vinyl groups bound to silicon atoms in the whole composition (especially the vinyl group-containing organopolysiloxane) is 0.01 to 3, preferably 0.05 to 2, more preferably 0.2 to 1.5. If the number ratio of these hydrogen atoms bound to silicon atoms (SiH groups) in hydrogenorganopolysiloxane to the vinyl groups in the whole silicone rubber composition is less than 0.01, the silicone gel cannot be yielded. If the number ratio is more than 3, the silicone gel deteriorates in heat resistance.

Examples of the platinum compound include platinum black, chloroplatinic acid, alcohol-modified chloroplatinic acid, and a complex of chloroplatinic acid and olefin, aldehyde, vinylsiloxane, or acetylene alcohol.

The blended amount of the platinum compound may be an effective amount, and can be suitably increased or decreased depending on a desired curing rate. The blended amount of the platinum compound is commonly 0.1 to 10000 ppm by mass, preferably 1 to 5000 ppm by mass of the total amount of the vinyl group-containing organopolysiloxane and the hydrogenorganopolysiloxane in terms of the mass of metal atoms in the platinum group. If this blended amount is too large, the silicone gel to be yielded may deteriorate in heat resistance.

The addition type liquid silicone rubber may further contain a reaction inhibitor for the purpose of regulating the pot life. Examples of the reaction inhibitor include methylvinylcyclotetrasiloxane, acetylene alcohols, siloxane-modified acetylene alcohols, and hydroperoxides.

To enhance the strength, the addition type liquid silicone rubber may further contain a reinforcing material. Examples of the reinforcing material include reinforcing silica, quartz powder, iron oxide, alumina, and vinyl group-containing silicone resin.

The addition type liquid silicone rubber may further contain additives such as pigment, a mold release agent, a heat-resistant agent, a fire retardant, a fluidity modifier, an antisettling agent, and an adhesion enhancer.

The elastic rubber body 11 may be any elastic rubber body. The elastic rubber body 11 can be manufactured by curing a rubber composition containing a rubber component. The curing time for the rubber composition can be regulated, for example, by adjusting the added amount of a catalyst or the curing temperature. More specifically, for example, raw materials for the rubber composition may be fed to a mixier such as a kneading device to mix the raw materials with the mixer, yielding a sheet-shaped rubber composition, which may be cured to manufacturer the elastic rubber body 11. The rubber composition may be cured at room temperature when curing the rubber composition. If the rubber composition is cured within a short time, it is preferable to heat the rubber composition.

### (Thickness)

Although the elastic rubber body 11 may have any thickness, the elastic rubber body 11 has a thickness of preferably 0.5 to 100 mm, more preferably 1 to 50 mm. If the thickness is in these ranges, the sheet 10 for a light-emitting display device can be preferably used for vehicle interior member.

### (Light transmittance)

The elastic rubber body 11, that is, the substrate 15, has light transmittance in the thickness direction. Since the substrate 15 has light transmittance, for example, upon irradiation with light from the light source 40 from the rear face 15B side of the sheet for a light-emitting display device, the light can be transmitted through the substrate 15 to create a light effect on the front face 15A side of the substrate 15. Specifically, this enables showing necessary information with light from the light source, and enables lighting the inside of a car, and showing images using the light source 40.

The substrate 15 has a total light transmittance of, for example, 50% or more, preferably 70% or more, more preferably 80% or more in the thickness direction. Since the elastic rubber body 11 has a total light transmittance of 50% or more, sufficient light transmittance can be imparted to the elastic rubber body 11, so that light emitted from the light source 40 is likely to emerge to the front face 15A side while the amount of light is a certain amount or more. As the total light transmittance of the substrate 15 increases, the total light transmittance becomes more preferable. The total light transmittance may be 100% or less, and may be practically 99% or less or 98% or less. For example, the total light transmittance of the substrate 15 can be in the above-mentioned range by adjusting the thickness of the elastic rubber body 11, the type of the rubber, and the types of additives such as pigment and dye to be added to the rubber suitably. The use of the silicone rubber facilitates enhancement of the total light transmittance. The total light transmittance can be measured, for example, in accordance with ASTM D1003 with a haze meter. If, as described below, only a partial region of the substrate 15 is constituted of the elastic rubber body 11, the total light transmittance of the substrate 15 in the thickness direction is the total light transmittance in the region in which the elastic rubber body 11 is disposed.

### (Durometer hardness)

The durometer hardness of the elastic rubber body 11 is measured by different methods depending on the hardness. The durometer hardness is commonly measured under the condition that the durometer hardness is in the range of 20 to 90. In the case of measurement in accordance with JIS K6253-3:2012 with a type A durometer, the durometer hardness is preferably 20 or more and 80 or less. A durometer hardness of 20 or more and 80 or less further enables the elastic rubber body 11 to achieve the compatibility between strength and a flexible texture. The durometer hardness of the elastic rubber body 11 is more preferably 20 or more and 70 or less, further preferably 20 or more and 65 or less from such a viewpoint. When the durometer hardness of a more flexible elastic rubber body 11 is measured in accordance with JIS K6253-3:2012 with a type E durometer, the durometer hardness is preferably 20 or more and 90 or less. A durometer hardness of 20 or more and 90 or less further enables the elastic rubber body 11 to achieve the compatibility between strength and a flexible texture. The durometer hardness of the elastic rubber body 11 is more preferably 30 or more and 90 or less, further preferably 40 or more and 90 or less from such a viewpoint.

The durometer hardness of the elastic rubber body 11 can be measured in accordance with JIS K6253-3:2012, for example, with an ASKER rubber hardness tester, which is available from KOBUNSHI KEIKI CO., LTD.

### (Skin layer)

The substrate 15 may be composed of a layer, namely the elastic rubber body 11, so that the surface of the elastic rubber body 11 may constitute the surface of the substrate 15. A skin layer (unillustrated) including a resin layer may however be formed on at least one face to constitute the surface of the substrate 15. It is preferable that the skin layer be constituted of resin other than rubber. Examples of the resin to constitute the skin layer include urethanic resin and acrylic resin. The skin layer to be disposed on the surface may have any thickness. For example, the thickness is preferably around 5 to 500 µm, more preferably 8 to 300 µm, further preferably 10 to 100 µm. The thickness of the skin layer can be adjusted to a certain thickness or less to maintain the surface texture of the substrate 15 satisfactorily without deterioration in the flexibility of the substrate 15.

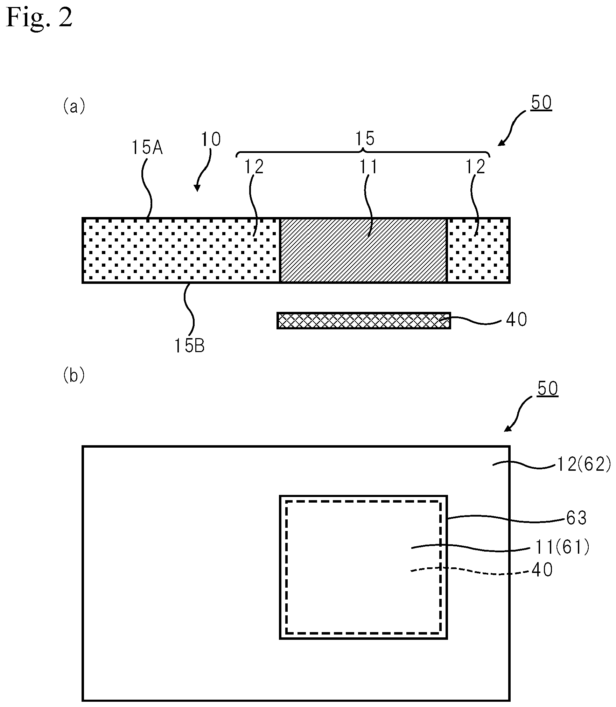

The whole region of the substrate 15 may be constituted of the elastic rubber body 11. As shown in Fig. 2(b), a region 62 constituted of a foam 12 may be disposed besides a region 61 constituted of the elastic rubber body 11. In this case, the elastic rubber body 11 constituting the region 61 is irradiated with light from the light source 40. This enables disposing the elastic rubber body 11 in a region of vehicle interior member in which a light performance is conducted and the foam 12 in a region thereof in which a light performance is not conducted. The weight of the substrate 15 can be reduced, so that the substrate 15 can also be preferably used for vehicle interior member. This enables cutting manufacturing cost of the sheet for a light-emitting display device.

For example, as shown in Fig. 2(b), the foam 12 may be provided with a hole 63, followed by fitting the elastic rubber body 11 into the hole 63. An unillustrated cutout may be made in the foam 12, followed by fitting the elastic rubber body 11 into the cutout.

The foam 12 is a resin foam. Examples of the resin constituting the foam include polyolefinic resin, urethanic resin, acrylic resin, and elastomeric resin. The resin for the foam 12 may be used alone or in combination of two or more. Among the above, the foam 12 is preferably a polyolefinic resin foam, containing polyolefinic resin as the resin. The use of polyolefinic resin as the foam enhances the flexibility and the mechanical strength.

### (Polyolefinic resin)

Examples of the polyolefinic resin include polyethylene resin, polypropylene resin, and an ethylene-vinyl acetate copolymer. Among these, polypropylene resin is preferable. The use of polypropylene resin facilitates imparting heat resistance to the substrate 15.

Examples of the polyethylene resin include low-density polyethylene (density: less than 0.930 g/cm³), medium-density polyethylene (density: 0.930 g/cm³ or more and less than 0.942 g/cm³), high-density polyethylene (density: 0.942 g/cm³ or more), and linear low-density polyethylene. The linear low-density polyethylene has a density of preferably 0.870 to 0.910 g/cm³, more preferably 0.875 to 0.907 g/cm³, further preferably 0.880 to 0.905 g/cm³. Multiple polyethylene resins can be used as the polyethylene resin. Polyethylene resin may be used having a density out of the above-mentioned range.

Examples of the ethylene-vinyl acetate copolymer for the polyolefinic resin include an ethylene-vinyl acetate copolymer containing ethylene at 50% by mass or more.

The polypropylene resin may be any polypropylene resin. Examples include a polypropylene homopolymer (homopolypropylene) and a copolymer of propylene and another olefin. The copolymer of propylene and the other olefin may be any of a block copolymer, a random copolymer, and a random block copolymer. A random copolymer (random polypropylene) is preferable. Examples of the copolymer of propylene and the other olefin include propylene-α-olefin containing propylene at preferably 75% by mass or more, more preferably 90% by mass or more.

Examples of the other olefin to be copolymerized with propylene include α-olefins such as ethylene, 1-butene, 1-pentene, 4-methyl-1-pentene, 1-hexene, 1-octene, 1-nonene, and 1-decene. Among these, ethylene is preferable. Accordingly, the random polypropylene is more preferably an ethylene-propylene random copolymer.

If polypropylene resin may be used as the polyolefinic resin, the polypropylene resin may be used alone or in combination with other polyolefinic resin than polypropylene resin or resin other than polyolefinic resin. For example, the polypropylene resin may be used in combination with polyolefinic resin other than polypropylene resin or resin other than polyolefinic resin. Examples of the resin other than polyolefinic resin include elastomeric resins.

Examples of the elastomeric resin include various rubber components such as ethylene-propylene-diene rubber (EPDM), ethylene-propylene rubber (EPM), polybutadiene rubber, polyisoprene rubber, and styrene rubber such as a styrene-butadiene copolymer (SBR) or a hydrogenated product thereof (HSBR). Examples also include thermoplastic elastomers such as olefinic thermoplastic elastomers and styrene-based thermoplastic elastomers.

As the content of the polypropylene resin contained in the foam increases, the content becomes more preferable from the viewpoint of heat resistance. For example, the content is preferably 50 to 100% by mass, more preferably 70 to 100% by mass, further preferably 80 to 100% by mass based on the total amount of the resins contained in the foam.

The resin constituting the foam 12 is also preferably polypropylene-based elastomer containing polypropylene resin and a rubber component from the viewpoint that both heat resistance and flexibility can be imparted. The polypropylene-based elastomer may be a mixture of polypropylene resin and the rubber component or a copolymer thereof. Polypropylene-based elastomers are classified as reactor type simply blends of polypropylene-based elastomers and dynamically crosslinked polypropylene-based elastomers according to the production method. The polypropylene-based elastomer is preferably reactor type polypropylene-based elastomer from the viewpoint that the dispersed rubber component has a small domain diameter and high transparency. As such a reactor type polypropylene-based elastomer, for example, a commercial item such as "Catalloy" (available from SunAllomer Ltd.) is also usable.

### (Foaming agent)

The foam 12 is preferably formed by foaming a foamable composition containing the above-mentioned resin and a foaming agent. Examples of the foaming agent include thermal decomposable foaming agents. Examples of usable thermally decomposable foaming agents include organic foaming agents and inorganic foaming agents. The thermally decomposable foaming agent is commonly used having decomposition temperature higher than the melting temperature of the resin. For example, it is preferable that the thermally decomposable foaming agent be used having a decomposition temperature of 140 to 270°C.

Specific examples of the organic foaming agent include azo compounds such as azodicarbonamide, metal azodicarboxylates (barium azodicarboxylate), and azobisisobutyronitrile; nitroso compounds such as N,N'-dinitrosopentamethylenetetramine; hydrazine derivatives such as hydrazodicarbonamide, 4,4'-oxybis(benzenesulfonyl hydrazide), and toluenesulfonyl hydrazide; and semicarbazide compounds such as toluenesulfonyl semicarbazide.

Examples of the inorganic foaming agents include ammonium carbonate, sodium carbonate, ammonium hydrogen carbonate, sodium hydrogen carbonate, ammonium nitrite, sodium borohydride, and monosodium citrate anhydride.

Among these, azo compounds are preferable, and azodicarbonamide is particularly preferable from the viewpoint of yielding fine cells, economic efficiency, and safety. These thermally decomposable foaming agents can be used alone or in combination of two or more.

Although the blended amount of the thermally decomposable foaming agent in the foamable composition may be adjusted depending on the expansion ratio of the foam, the blended amount is preferably 0.5 to 20 parts by mass, more preferably 1 to 15 parts by mass, further preferably 2 to 10 parts by mass based on 100 parts by mass of the resin.

A foaming agent other than a thermal decomposable foaming agent may however be used as the foaming agent. For example, a physical foaming agent may be used. It is preferable to use high-pressure inert gas as the physical foaming agent. As long as the inert gas is inert with the resin composition, which can be impregnated with the inert gas, the inert gas may be any inert gas. Examples include carbon dioxide, butane gas, nitrogen gas, and air. These gases may be mixed for use. Among these, carbon dioxide or butane gas is preferable from the viewpoint of facilitating the enhancement of the expansion ratio of the foam. It is preferable that the inert gas for the impregnation be in a supercritical state or a subcritical state.

### (Other additives)

Additives such as a crosslinking agent, a crosslinking aid, an antioxidant, a thermal stabilizer, coloring agents, a fire retardant, an antistatic agent, a filler, and an agent for adjusting decomposition temperature that are commonly used for foams may be blended into the foam or the foamable composition as needed. Among these, it is preferable to use an antioxidant and an agent for adjusting decomposition temperature.

### (Expansion ratio)

The foam 12 has an expansion ratio of preferably 4 to 50 cm³/g, more preferably 8 to 30 cm³/g, further preferably 10 to 20 cm³/g.

### (Closed cell ratio)

The foam 12 may be an open cell foam, a semi-closed cell foam, or a closed cell foam. The foam 12 is preferably a closed cell foam.

In the closed cell foam, many of the cells contained in the foam are closed cells. Specifically, the closed cell foam has a closed cell ratio of preferably 70% or more, more preferably 80% or more, further preferably 90% or more. The upper limit of the closed cell ratio is not particularly restricted. The upper limit is 100%.

The closed cell ratio can be measured in accordance with the method of ASTM D2856(1998). Specifically, the closed cell ratio may be measured in the following procedure.

First, a planar square specimen having a side length of 5 cm is cut out of the foam. The thickness of the specimen is measured to calculate the apparent volume V₁ of the specimen, followed by the measurement of the weight W₁ of the specimen.

Then, the volume V₂ of the cells is calculated based on the following expression. Note that the density of the matrix resin constituting the specimen is defined as ρ (g/cm³).$Volume of cells : {V}_{2} = {V}_{1} - {W}_{1} / ρ$

Subsequently, the specimen is sunk in distilled water at 23°C 100 mm deep from the surface of the water to apply a pressure of 15 kPa to the specimen for 3 minutes. Thereafter, the specimen is decompressed in the water and left to stand for 1 minute. The specimen is then taken out, followed by removal of water from the surface of the specimen. The weight of the specimen W₂ is measured, followed by the calculation of the open cell ratio F₁ and the closed cell ratio F₂ based on the following expression. $Open cell ratio {F}_{1} \left(%\right) = 100 \times \left({W}_{2}-{W}_{1}\right) / {V}_{2}$ $Closed cell ratio {F}_{2} \left(%\right) = 100 - {F}_{1}$

### (Crosslinking degree)

The foam 12 is preferably a crosslinked foam, more preferably an electron beam crosslinked object, crosslinked with an electron beam. If the foam 12 is a crosslinked foam, especially an electron beam crosslinked object, the foam 12 has satisfactory durability and formability. Although the foam 12 may have any crosslinking degree, the foam 12 has a crosslinking degree of, for example, 10 to 70% by mass, more preferably 20 to 60% by mass. If the crosslinking degree of the foam 12 is in the above-mentioned range, the mechanical strength and the flexibility of the substrate 15 are easily enhanced. In addition, the foam 12 can be appropriately foamed. The crosslinking degree is measured by the following method.

Around 100 mg of a specimen is collected from the foam, followed by measuring the weight A (mg) of the specimen precisely. Then, this specimen is immersed in 30 cm³ of xylene at 120°C and left to stand for 24 hours. Subsequently, the undissolved matter is filtered off on a 200-mesh wire net to be collected, followed by vacuum drying. The weight B (mg) of the undissolved matter is precisely measured. The crosslinking degree (% by mass) is calculated from the obtained values according to the following expression.$Crosslinking \left(% by mass\right) = 100 \times \left(B/A\right)$

The foam 12 may be any foam. The foam 12 can be produced by foaming the foamable composition containing the resin component and the foaming agent with the foaming agent. At this time, the foamable composition is appropriately foamed with the foaming agent by heating. Preferably, the foamable composition is crosslinked to yield a crosslinked foamable composition, which is foamed to yield the foam 12. The foamable composition may contain additives as needed besides the resin component and the foaming agent.

### <Laminated body>

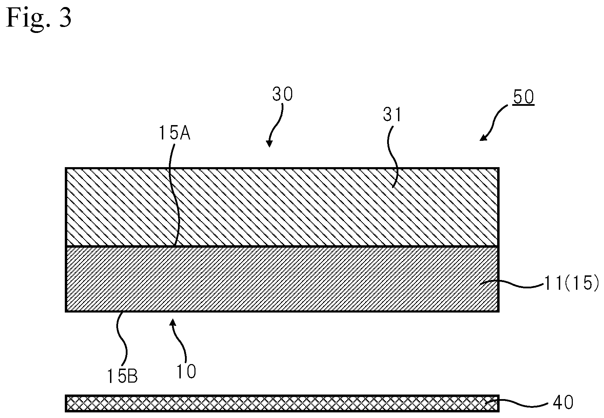

Another member may be further laminated on the sheet 10 for a light-emitting display device to constitute a laminated body. Fig. 3 shows an embodiment of the laminated body. As shown in Fig. 3, it is preferable that the laminated body 30 includes the above-mentioned substrate 15 and a skin 31 bonded to the substrate 15. The skin 31 is bonded to one face (front face 15A) of the substrate 15. The skin 31 can therefore decorate the front face of the sheet 10 for a light-emitting display device, so that the laminated body 30 (sheet for a light-emitting display device) including the skin 31 can be preferably used for vehicle interior member.

Examples of the skin 31 include resin sheets such as a polyvinyl chloride sheet and a sheet including a mixed resin of polyvinyl chloride and ABS resin; a thermoplastic elastomer sheet; fabrics including natural fiber or artificial fiber; knitting; nonwoven fabric; fake leathers such as artificial leather and synthetic leather; and metals. An article may be used that is fabricated in the method involving transferring the unevenness of real leather, stone, or wood to a silicone stamper to execute a design such as a leather pattern or a wood-grain pattern on the surface of an article with the silicone stamper. To impart light transmittance to the skin 31, the skin 31 may be suitably provided with many holes by punching processing.

The skin 31 preferably has light transmittance. If the skin 31 and the elastic rubber body have light transmittance, upon the radiation of light from the light source 40 disposed on the rear face side of the substrate 15, the light can be transmitted through the elastic rubber body 11 (substrate 15) and the skin 31 to create a light effect on the front face side of the sheet (laminated body) for a light-emitting display device.

The skin 31 only has to have a total light transmittance of, for example, 10% or more, and has a total light transmittance of preferably 20% or more, more preferably 40% or more. Since the skin 31 has a total light transmittance of 10% or more, the skin 31 can has sufficient light transmittance, light emitted from the light source 40 is likely to emerge to the front face side of the sheet for a light-emitting display device while the amount of light is a certain amount or more. Although the skin 31 only has to have a total light transmittance of 100% or less, the skin 31 may have a total light transmittance of, for example, 90% or less, or 80% or less. For example, the total light transmittance of the skin 31 can be in the above-mentioned range by adjusting the skin type suitably. In the case of fabrics, knitting, and nonwoven fabrics, the total light transmittance can be regulated by adjusting the opening size or the density. In the case of punching processing, the total light transmittance can be regulated by adjusting the hole size and the number of holes per unit area.

The skin 31 may have a printed layer or a printed film. The printed layer is printed on one face of the skin 31 to be formed. The printed film is laminated on one face of the skin 31 to be formed. The printed film is fabricated by forming the printed layer on a substrate film such as a polyolefin film or a polyester film including a PET film.

Known methods such as ink jetting, screen printing, and gravure printing can be suitably used as the method for forming the printed layer. The printed layer may display a logotype, a pattern, or an icon.

It is preferable that the skin 31 be bonded directly to the front face 15A of the substrate 15. The skin 31 does not, however, have to be necessarily bonded directly to the substrate 15. The skin 31 may be bonded to the front face of the substrate 15 through another layer (unillustrated) such as an adhesive layer.

As shown in Fig. 1, if the elastic rubber body 11 constitutes the front face 15A of the substrate 15, the skin 31 may be bonded to the elastic rubber body 11 directly or bonded to the elastic rubber body 11 through another layer such as an adhesive layer.

Examples of the method for bonding the skin 31 to the substrate 15 include extrusion lamination, adhesive lamination, involving applying adhesive to the skin 31 and the substrate 15 to bond both, thermal lamination (thermal fusion), hot melting, and a high frequency welder method. In the case of metal, examples include electroless plating, electrolytic plating, and vapor deposition. The skin 31 may however be bonded to the substrate 15 by any method.

### <Light-emitting display device>

As shown in Figs. 1, 2, and 3, the inventive sheet for a light-emitting display device can be combined with the light source 40 to constitute a light-emitting display device 50. It is preferable that the light source 40 be disposed on the opposite face side (that is, the rear face 15B side) to the front face 15A of the substrate 15. The light source 40 irradiates the sheet 10 for a light-emitting display device with light. The light from the light source 40 disposed on the rear face 15B side can pass through the sheet for a light-emitting display device to conduct various light effects on the front face side.

The light source 40 may be any light source to be used as light sources for light units and displays such as fluorescent lamps, incandescent lamps, LEDs, and organic EL devices. Among these, LEDs and organic EL devices are preferable. Above all, LEDs are preferable. LEDs are also referred to as light-emitting diodes. Although the light source 40 is shown as a surface light source, for example, in Fig. 1, the light source 40 may be a point light source. The point light source may have any size. The point light source may have a size of around 1 cm² or less or a size of around 0.1 cm² or less. For example, the point light source may have a size of around 0.001 cm² or more or a size of around 0.005 cm² or more. The light source 40 may be a single light source or multiple light sources. If the light source 40 is multiple light sources, the multiple light sources 40 may be arranged in a specific shape to display specific information.

Light from the light source 40 is used for various functions. The light may be used for lighting, image display, and alert display, or may be used for light sources for illuminating icons, logotypes, and patterns formed by the printed layers on the skins. The light may be for indicating operating positions of motion sensors, touch sensors, switches, and others. Accordingly, a switch or a touch sensor, which is unillustrated, may be disposed on the rear face side of the sheet for a light-emitting display device.

For example, in the case of indicating the operating positions of sensors or switches, the operating positions can be illuminated without the illustration of the peripheries of the operating positions to notify the operating positions. In this case, the lights may be blinked.

Furthermore, it is preferable that multiple point light sources or a surface light source be used for lighting the inside of cars or displaying alert. The lighting may be for illuminating the inside of cars or for conducting a performance inside cars (for example, light emission to the music).

### <Applications>

The sheet for a light-emitting display device is preferably used for vehicle interior members. Among them, the sheet for a light-emitting display device is more preferably used for vehicle interior member as the laminated body 30 provided with the skin 31. The sheet for a light-emitting display device is preferably used for vehicle interior member especially in the automotive field. It is preferable that the sheet constitute ceiling material, a door, or an instrument panel.

The sheet 10 for a light-emitting display device is installed so that while the front face 15A of the substrate 15 is disposed on the interior side, the rear face 15B of the substrate 15 is disposed on the opposite side to the interior side. The interior side is decorated with vehicle interior member, and is the outer peripheral face side of an object to be fit with the vehicle interior member.

It is preferable that the inventive sheet for a light-emitting display device be molded into a desired shape to be used. The sheet for a light-emitting display device is molded to be preferably used as interior member.

Examples of the method for molding the sheet for a light-emitting display device include stamping, vacuum forming, compression molding, and inject molding. Among these, stamping and vacuum forming are preferable. Although both of forming over a male mold and forming in a female mold can be adopted as the vacuum forming, forming over a male mold is more preferable.

If the inventive sheet for a light-emitting display device is used as vehicle interior member as described above, light from the light source disposed on the rear face side of the sheet for a light-emitting display device enables the front face of the sheet for a light-emitting display device to emit the light, or various performances can be conducted in a car by irradiating the inside of the car with light from the front face of the sheet for a light-emitting display device.

### Reference Signs List

10 sheet for light-emitting display device
11 elastic rubber body
12 foam
15 substrate
15A front face
30 laminated body
31 skin
40 light source
50 light-emitting display device

## Claims

1. A light-emitting display device comprising:
a sheet for a light-emitting display device comprising a substrate having light transmittance and comprising an elastic rubber body and
a light source which irradiates the sheet for a light-emitting display device with light.

2. The light-emitting display device according to claim 1, wherein rubber constituting the elastic rubber body is silicone rubber.

3. The light-emitting display device according to claim 2, wherein the rubber constituting the elastic rubber body comprises silicone gel.

4. The light-emitting display device according to claim 1, wherein the rubber constituting the elastic rubber body has a durometer hardness of 20 or more and 80 or less in a case of measurement with a type A durometer in accordance with JIS K6253-3, or has a durometer hardness of 20 or more and 90 or less in a case of measurement with a type E durometer in accordance with JIS K6253-3.

5. The light-emitting display device according to claim 1, wherein the substrate further comprises a foam, and the elastic rubber body is irradiated with light from the light source.

6. The light-emitting display device according to claim 1, wherein the sheet for a light-emitting display device further comprises a skin bonded to the substrate directly or through another layer.

7. The light-emitting display device according to claim 1, wherein the sheet for a light-emitting display device is a vehicle interior member.

8. A sheet for a light-emitting display device having light transmittance and comprising a substrate comprising an elastic rubber body, the sheet being used in combination with a light source.
